# EUROPÄISCHE PATENTSCHRIFT

(11) **EP 0 918 663 B1**
(45) Veröffentlichungstag und Bekanntmachung des Hinweises auf die Patenterteilung: **15.03.2000**
(21) Anmeldenummer: 97937446.9
(22) Anmeldetag: 12.08.1997
(51) Int. Cl.: B60R 13/08, B60J 5/04, B60R 21/04

(54) **KRAFTFAHRZEUG MIT WÄRMEDÄMMUNG**
MOTOR VEHICLE WITH HEAT INSULATION
VEHICULE AUTOMOBILE AVEC ISOLATION THERMIQUE

(30) Priorität: 13.08.1996 DE 19632550
(43) Veröffentlichungstag der Anmeldung: 02.06.1999
(73) Patentinhaber: Möller Plast GmbH, 33649 Bielefeld (DE)
(72) Erfinder: HESCH, Rolf, D-32657 Lemgo (DE)
(74) Vertreter: Frank, Gerhard, Dipl.-Phys.
(86) Internationale Anmeldenummer: DE9701710
(87) Internationale Veröffentlichungsnummer: WO9806601

(56) Entgegenhaltungen:
- EP-A- 0 071 914
- EP-A- 0 363 130
- EP-A- 0 511 157
- EP-A- 0 571 640
- WO-A-93/11001
- DE-A- 1 480 299
- DE-A- 2 006 741
- DE-A- 2 436 219
- DE-A- 3 932 121
- DE-A- 4 123 593
- GB-A- 2 213 097
- GB-A- 2 216 081
- US-A- 2 768 672
- US-A- 3 324 968
- US-A- 4 830 908
- US-A- 5 395 135
- PATENT ABSTRACTS OF JAPAN vol. 096, no. 004, 30.April 1996 & JP 07 323792 A (KASAI KOGYO CO LTD), 12.Dezember 1995,

## Beschreibung

### Stand der Technik

Im Fahrzeugbau, besonders im PKW-Bau, werden große Anstrengungen unternommen, den Kraftstoffverbrauch zu senken, um durch geringere Emissionen die Umwelt zu entlasten. Verminderung des Kraftstoffverbrauchs wird derzeit in erster Linie durch Verminderung der Fahrzeuggewichte angestrebt.

Parallel dazu bemühen sich alle Fahrzeughersteller andererseits intensiv darum, ihre Fahrzeuge sicherer zu gestalten, um das Unfallrisiko für die Insassen zu mindern, was oft eine Gewichtserhöhung durch zusätzliche Bauteile nach sich zieht, wie beispielsweise Einbau von Querholmen in den Türen und Verstrebungen im Fahrzeugkäfig. Was diese an Mehrgewicht bringen, läßt sich über Einsparungen an Innenausstattungen auch nicht annähernd ausgleichen.

Durch den Einsatz von kleineren Motoren mit besseren Wirkungsgraden wird es zunehmend erforderlich, Zusatzheizungen vor allem in Fahrzeuge der kleineren Klasse und der Mittelklasse einzubauen, weil kleinere Motoren und bessere Motorwirkungsgrade nicht mehr genug Abwärme anfallen lassen, um die Fahrzeuge im Winter ausreichend beheizen zu können.

Als weitere Entwicklung, die parallel stattfindet, werden Fahrzeuge immer komfortabler ausgestattet, um sich in der Käufergunst Vorteile zu erarbeiten. Insbesondere die serienmäßige Ausstattung von Fahrzeugen auch der unteren und mittleren Klassen mit Klimaanlagen nimmt mit stark steigender Tendenz zu.

Durch den vermehrten Einsatz von Zusatzheizungen und Klimaanlagen werden die oft durch mühsame konstruktive Kleinarbeit erarbeiteten Errungenschaften hinsichtlich Reduzierung des Kraftstoffverbrauchs und Emissionen mit einem Schlag wieder verspielt:

Klimaanlagen wiegen im Durchschnitt 15 bis 16 kg, also weit mehr, als an Innenausstattungsteilen jemals eingespart werden kann. Hinzu kommt, daß Klimaanlagen im Durchschnitt 0,6 1 je 100 km an Treibstoff-Mehrverbrauch verursachen. Wird eine Klimaanlage eingebaut, gehen sowohl die Gewichtseinsparungen an anderen Stellen als auch der dadurch erzielte Minderverbrauch ganz oder überwiegend verloren. Man gewinnt an Fahrkomfort, aber der Verbrauch und die Umweltbelastung werden erhöht.

Brennstoff-Zuheizer wiegen durchschnittlich 2 bis 4 kg und verbrauchen 0,2 bis 0,4 1 Treibstoff pro Stunde. Passive Zuheizer mit Wärmerückgewinnung aus der Abluft des Insassenraums über Wärmepumpe, Desorptions-Heizer u.ä. sind in ihrer Leistung begrenzt, sind überwiegend schwerer als Brennstoffzuheizer und über den Verbrauch an Elektroenergie weder wirtschaftlicher und schon gar nicht ökologischer.

Überraschender und unverständlicher Weise finden also im Pkw-Bau Entwicklungen parallel statt, von denen jede einzeln betrachtet als Verbesserung anzusehen ist, die sich hinsichtlich ihrer ökologischen Konsequenzen in ihrer Gesamtheit aber teilweise gegenseitig aufheben. Die Gesamtbilanz ist eher enttäuschend.

In ökologischer Hinsicht ist insbesondere der starke Trend zu Klimaanlagen ein schwerwiegender Rückschritt. Er führt zu einem beachtlichen Treibstoff-Mehrverbrauch und somit zu erhöhten Schadstoff-Emissionen. Deutlich wird das u.a. an neuesten Forderungen selbst aus Kreisen der Automobilverbände, den Fahrzeugherstellern zur Auflage zu machen, den Mehrverbrauch an Treibstoff als Folge des Einsatzes von Klimaanlagen in den technsichen Fahrzeugdaten offen zu deklarieren, damit der Käufer deutlich erkennen kann, mit welchen zusätzlichen Betriebskosten er bei Klimaanlagen rechnen muß, vor allem aber, mit welchen zusätzlichen Belastungen der Umwelt er den Komfort einer Klimaanlage erkauft.

Aus der US-A-2 768 672 ist ein gattungsgemäßes Fahrzeug bekannt mit einer Teil-Wärmedämmung, die aus der Auflage bzw. der Verbindung von Asbestmatten mit "außen-begrenzenden Flächen des Innenraums" besteht und sich darin auch erschöpft. Die beabsichtigte Wärmedämmung muß bei dieser bekannten Lösung mit Nachteilen (z.B. höheres Gewicht durch die Asbestmatten) erkauft werden, die zumindest einen Teil der Vorteile einer Wärmedämmung neutralisieren.

### Darstellung der Erfindung

Die Erfindung macht sich zur Aufgabe, die Wärmedämmaßnahmen so auszugestalten, daß sie auch die ökologische Gesamtbilanz des Systems Fahrzeug z.B. durch einen geringeren Energieverbrauch und somit geringere Schadstoff-Emissionen ermöglichen. Dies soll insbesondere auch dann erreicht werden, wenn auf zusätzliche Maßnahmen zur Heizung und/oder Klimatisierung nicht verzichtet werden kann oder soll, die aus oben genannten Gründen eine wesentliche Verschlechterung der ökologischen Gesamtbilanz des Systems 'Fahrzeug' mit sich bringen.

Erfindungsgemäß sollen entsprechend den Merkmalen des Kennzeichens von Anspruch 1 zur Erreichung dieses Ziels Fahrzeuge zunächst intensiv wärmegedämmt werden, insbesondere die Teile, in denen sich Insassen aufhalten und erweiterte Fahrzeugbereiche, bei denen nach Konstruktion und Funktion eine Wärmedämmung möglich ist, z.B. Kofferräume, Laderäume u.a. Unter Wärmedämmung ist im Sinne der vorliegenden Anmeldung zu verstehen, daß außenbegrenzende Fahrzeugteile, wie Türen, Dächer, Bodengruppen, Schweller, Säulen, Quer- und Längsträger, Kofferraumumhausungen u.a. mit wärmedämmenden Schichten oder wärmedämmenden Formteilen als Dämmkörper versehen werden sollen, soweit dies konstruktiv durchführbar ist.

Darüber hinaus soll die Wärmedämmung erfindungsgemäß bauteilspezifisch ausgebildet und angewendet werden, so daß ihr Nutzen als "Nur-Wärmedämmung" weit überschritten werden kann, indem auch die übrigen Eigenschaften des jeweiligen Bauteils verbessert werden, wie dies im folgenden ausführlich dargestellt wird:

Zunächst wird verhindert, daß im Sommer Wärme kaum gebremst in den Innenraum, besonders in den Fahrgastraum einfließen kann, die bei Einbau einer Klimaanlage eine entsprechend große Kühlkapazität erforderlich macht. Die Kosten einer Wärmedämmung sind sehr viel geringer als die für eine Klimaanlage und das Gewicht ebenfalls. Sie verursacht im Gegensatz zur Klimaanlage keine Betriebskosten und vor allem keine Emissionen.

Für Fahrzeuge unterer und mittlerer Preisklassen wird ein wirksamer Wärmeschutz den Einbau von Klimaanlagen in der Regel entbehrlich machen oder man kommt zumindest mit einer sehr viel kleineren Anlage aus. Bei Fahrzeugen, bei denen auf eine Klimaanlage trotz der Wärmedämmung nicht verzichtet werden soll, wird eine Klimaanlage mit einem Bruchteil der Kühl kapazität ausreichen. Kleinere Klimaanlagen verbrauchen naturgemäß weniger Energie und verursachen proportional weniger Emissionen. Gewicht wird durch sie auch gespart, was weitere Energieeinsparungen nach sicht zieht.

Wärmedämmung, die das Eindringen von Wärme im Sommer vermindert, verhindert auch das Abfließen von Wärme im Winter. Fahrzeuge können mit geringerem Energieeinsatz im Winter warm gehalten werden. Die zunehmend geringer werdenden Abwärmemengen reichen dann aus, die Fahrzeuge zu beheizen. Zuheizungen werden dann überwiegend entbehrlich oder es reichen zumindest solche mit kleinerer Wärmeleistung. Auch in diesem Fall wird also sowohl Gewicht als auch Treibstoff gespart. Treibstoff sogar in zweifacher Hinsicht, nämlich für die Warmlufterzeugung selbst, aber auch für den Antrieb des Mehrgewichtes oder Zusatzheizung.

Wärmedämmung kann in einem hohen Ausmaß unter Einsatz von nachwachsenden Rohstoffen bewirkt werden. Diese sollen daher bevorzugt eingesetzt werden. Nachwachsende Rohstoffe bewirken keine Emissionen, sondern das Gegenteil. Bei ihrer Assimilation wird bereits in der Luft vorhandenes CO₂ reduziert und es wird Sauerstoff freigesetzt. Durch Kombination mit Bindemitteln und Schäumen aus synthetischen Kunststoffen, Naturstoffderivaten und/oder biogenen Stoffen lassen sich alle Möglichkeiten der Dämmstoff- bzw. Dämmkörperausbildung realisieren.

Wirksame Wärmedämmung ergibt automatisch auch einen bedeutenden Beitrag zu mehr Verkehrssicherheit: Wie durch die eine Studie des TÜV ermittelt, mindert eine Temperaturerhöhung im Fahrzeug von 25°C auf 35° C die Verkehrstauglichkeit des Fahrers in gleichem Maße wie ein Blutalkoholgehalt von 0,5 Promille.

Wärmedämmaterialien in Form von Dämmkörpern können im Verbund mit Bewehrungselementen und/oder Beplankungen z.B. durch Bleche auch einen bedeutenden, mechanischen Schutz ergeben und können die neuerdings in Fahrzeugtüren zur Verbesserung des Seitenaufprallschutzes eingebauten Metallholme ganz oder teilweise ersetzen. Wegfall der Holme spart ebenfalls Gewicht. Ersatz der Holme durch biegesteife und energievernichtende Wärmedämmelemente im Verbund mit den Außen- und Innenblechen der Türen kann also ohne nennenswerte Gewichtserhöhung erfolgen, evtl. ist sogar eine Gewichtsverminderung denkbar: allein schon eine vollflächige Ausschäumung von beispielsweise Fahrzeugtüren zum Zwecke der Wärmedämmung erhöht nachweislich das Widerstandsmoment der Tür gegenüber einer Hohltür, wie sie nach dem Stand der Technik gebaut wird, bedeutend. Verstärkung der Wärmedämmschäume durch Fasern, Fäden, Halme, Vliese, Gewebe und ähnliche Gebilde, vorzugsweise aus nachwachsenden Rohstoffen, haben bei Untersuchungen eine weitere, bedeutende Festigkeitserhöhung erbracht. Selbst bei einer Halbierung der Blechstärken konnten Festigkeitswerte erzielt werden, die weit über denen nach dem Stand der Technik lagen und das sogar bei vermindertem Gesamtgewicht.

Wärmedämmung in oben dargestellter Weise mit zusätzlichen Verstärkungsmaßnahmen löst auch Sicherheitsaufgaben in zweifacher Hinsicht: Das Innenraumklima von Fahrzeugen kann auch ohne Klimaanlagen oder mit kleinen Kühlkapazitäten in Bereichen gehalten werden, die der Fahrtüchtigkeit des Fahrers förderlich sind. Im Crash-Fall bieten in beschriebener Weise wärmegedämmte Fahrzeuge eine hohe Festigkeit und ein hohes Vermögen, Aufprallenergie zu verbrauchen. Genannte Wärmedämmelemente splittern auch nicht mit scharfen Kanten.

Weitere Vorteile genannter Wärmedämmelemente bestehen in der Schalldämmung. Ein geringer Geräuschpegel im Fahrzeug ist neben einer angenehmen Temperatur eine weitere Voraussetzung für eine hohe Fahrtüchtigkeit des Fahrers. Er ermüdet weniger schnell und ist nervlich weniger belastet. Einige Fahrzeughersteller vermindern die Innenraumgeräuschbildung besonders kritischer Zonen bereits durch Filze. Getrennte Schalldämmaßnahmen sind bei einem intensiv wärmegedämmten Fahrzeug überflüssig, weil eine dahingehend ausgestaltete Wärmedämmung auch den Schallschutz als gewollten oder ungewollten Nebeneffekt verbessert.

Erfindungsgemäß durchgeführte Wärmedämmaßnahmen erlauben, besonders wenn die Wärmedämmelemente mit den Karosserieblechen fest verbunden werden, z.B. durch Anschäumung oder Verklebung, die Dicke der Karosseriebleche zu vermindern, ohne an Festigkeit zu verlieren. Insbesondere in beschriebener Weise verstärkte Dämmelemente können tragende Funktionen teilweise anstelle der Bleche übernehmen - ein wesentlicher Beitrag zum leichten Recycling und zu mehr Ökologie.

Die Entwicklung im Fahrzeugbau weist neben den oben genannten, aus ökologischer Sicht kontraproduktiven Tendenzen auch eine Zielrichtung zum "Fahrzeugmodul" auf. Eine Tür soll z. B. in Zukunft nicht mehr in vielen Einzelteilen von unterschiedlichen Lieferanten an den Pkw-Hersteller angeliefert und erst dort zusammengefügt werden, sondern sie soll als "Modul" fix und fertig angeliefert werden, um nur noch eingehängt werden zu können. In beschriebener Weise hergestellte Wärmedämmelemente können, wenn sie erfindungsgemäß verstärkt werden, zusätzlich zum Wärmeschutz und zum Unfallschutz auch die Funktion des Trägers von Funktionselementen wie z.B. Fensterheber, Türverriegelungen etc. übernehmen und mit einer dekorativen Innenseite die Türinnenverkleidungen alter Prägung als dekorativem Einzweckelement ersetzen, so daß die erfindungsgemäße Lösung auch insoweit dieser Entwicklung Rechnung trägt.

### Kurze Beschreibung der Zeichnungen:

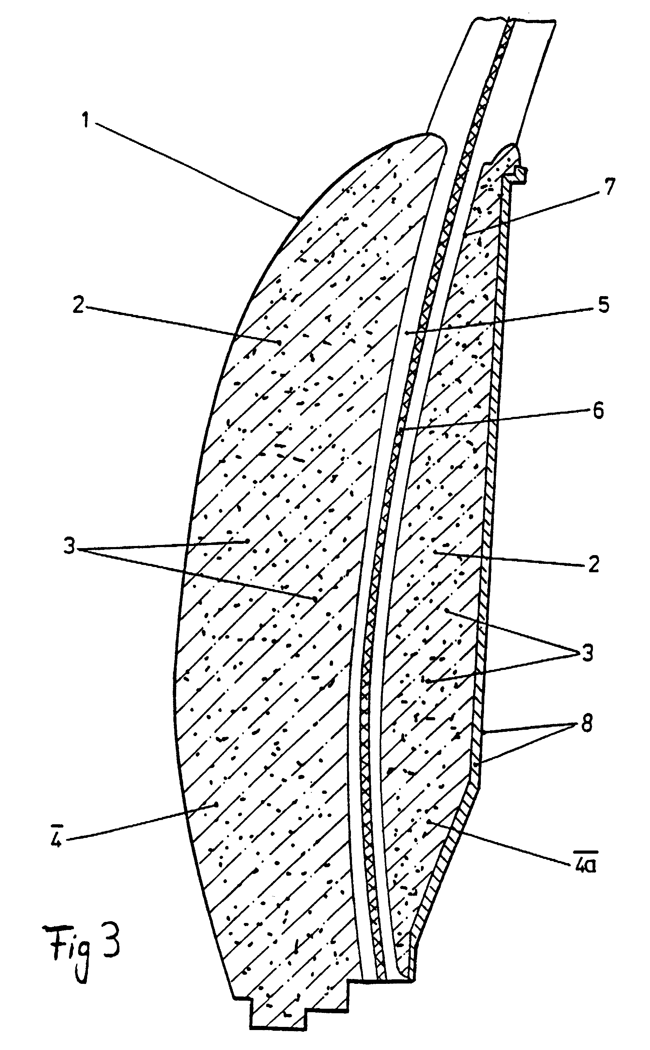

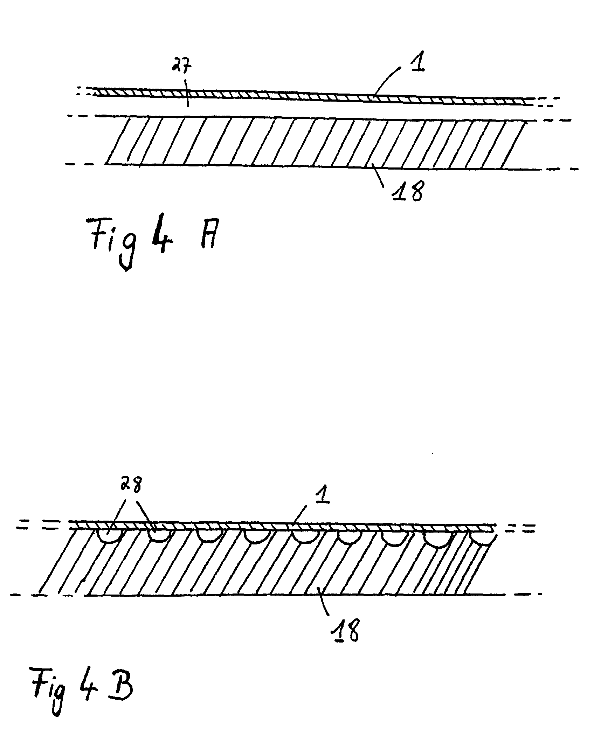

Ein bevorzugtes Ausführungsbeispiel der erfindungsgemäßen Idee soll an den Beispielen der Figuren 1-4 veranschaulicht werden; es zeigen:
- Fig. 1: einen Längsschnitt durch eine Kfz-Karosserie mit wärmegedämmten Bereichen,
- Fig. 2: einen Querschnitt in der Ebene A-A bzw. A'-A' durch die Kfz-Karosserie nach Fig. 1,
- Fig. 3: einen Vertikalschnitt durch eine Kfz-Tür mit erfindungsgemäßer Wärmedämmung, und
- Fig. 4A, 4B: zwei Querschnitte durch ein Kfz-Dach mit Innenbelüftung.

### Beschreibung von bevorzugten Anwendungsbeispielen:

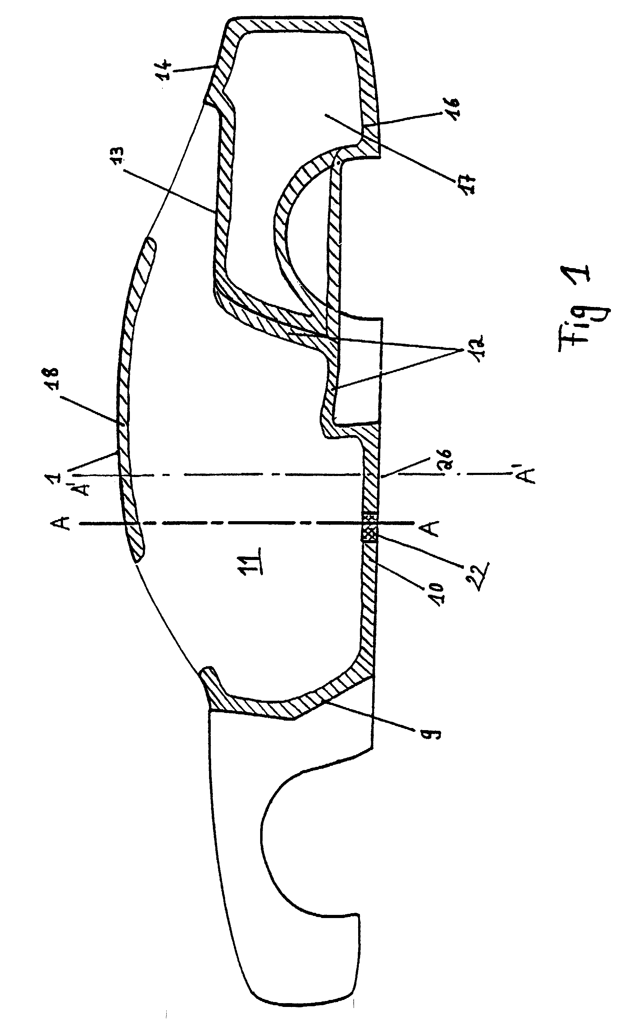

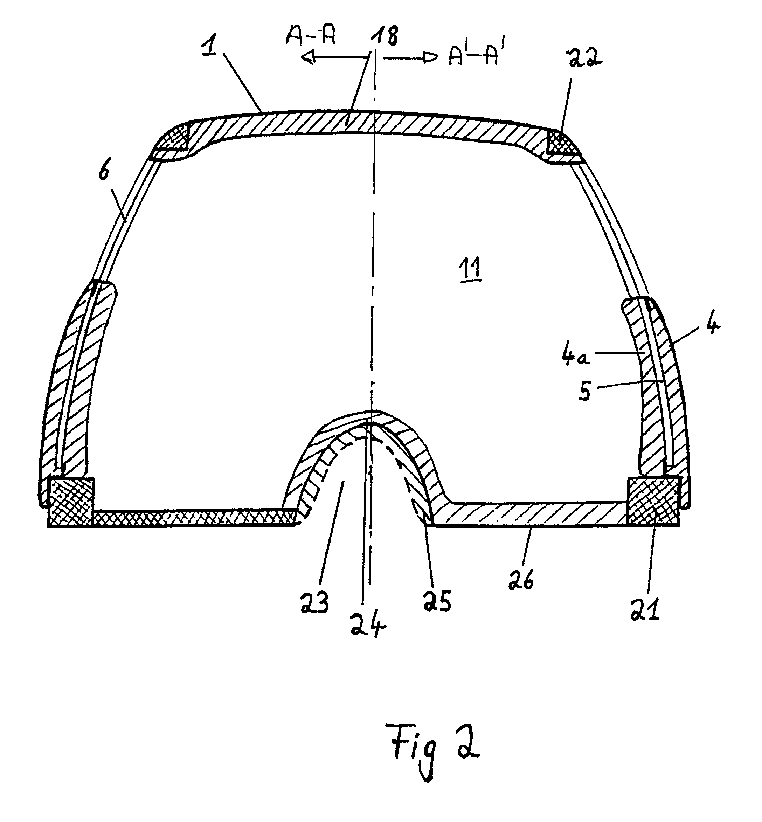

Anhand der Figuren 1 und 2 sollen im folgenden die wesentlichen Bereiche des Kraftfahrzeugs, die mit einer erfindungsgemäßen Wärmedämmung versehen sind, einzeln betrachtet werden:

Grundlegend hierbei ist, daß abhängig von den Funktionen und spezifischen Belastungen jedes dieser Bereiche eine Wärmedämmung ausgewählt werden kann (sei es als Dämmkörper mit vorgegebener Form, sei es als Wärmedämmaterial, dessen Form erst bei/nach der Anbringung an seinem zugeordneten Bauteil entsteht, z.B. durch Aufschäumen/Erwärmung, die aufgrund ihrer sonstigen Eigenschaften die Grundfunktion des zugeordneten Bauteils sogar noch ergänzt und verbessert; durch die Integration des jeweiligen Wärmedämmaterials entstehen somit neue Funktionseinheiten mit qualitativ verbesserten Eigenschaften nicht nur hinsichtlich der angestrebten Wärmedämmung, sondern auch im Hinblick auf mechanische Stabilität, Schalldämmung, Gewichtsreduzierung usw.
(a) Vielfach befinden sich Hohlräume in der Karosserie, welche zwischen dem Innenraum und dem Außenblech 1 liegen, als Beispiel seien hier die Holme 22, Schweller 21 und der Bereich zwischen innerem und äußerem Radlauf genannt.
   Hier wird die Wärmedämmung idealerweise durch Ausschäumen erreicht. Dazu benötigt man lediglich eine kleine Öffnung in dem jeweiligen Hohlraum, um das Dämmaterial in flüssiger Form einzubringen. Das Aushärten bzw. die Polymerisation des verwendeten Kunststoffs, beispielsweise Polyurethan geschieht erst danach. Der Beginn des Ausschäumens kann bei vielen Kunststoffen von außen initiiert werden, beispielsweise indem man zunächst unverschäumte Konturstücke in den Hohlraum plaziert und dann durch Wärmeeinwirkung zum Aufschäumen bringt.
(b) Im Armaturen- und Fußbereich 9 wird Dämmaterial gewählt, welches neben guten Wärmedämmeigenschaften auch über elastische und/oder schockabsorbierende Eigenschaften verfügt, um bei Unfällen die Gefahr insbesondere von Kopf- und Knieverletzungen von Fahrer und Beifahrer zu verringern.
   Während im Bereich des Armaturenbretts weitgehend starre Formteile als Dämmkörper zur Wärmedämmung vorgesehen sind, ist im Bereich unterhalb des Armaturenbretts 9 auch das Aufschäumen von Wärmedämmaterial oder das Aufkleben flexibler Isoliermatten denkbar. Wichtig ist in jedem Fall, daß das Isoliermaterial fest mit dem davorliegenden Blech verbunden, beispielsweise verklebt ist. Nur so kann eine optimale Energiedissipation im Falle eines Aufpralls erreicht werden.
   In diesem an den Motorraum angrenzenden Bereich 9 kann die Wärmedämmung beispielsweise durch geeignete Profilierung zum Motorraum hin (Eierkartonprofil) einen Beitrag auch zur Schalldämmung leisten.
(c) Im Bodenbereich 10 ist ein Material, beispielsweise ein Verbundwerkstoff, zur Wärmedämmung gewählt, das eine harte, widerstandsfähige Oberfläche aufweist, da dieser Bereich insbesondere durch das Ein- und Aussteigen mechanisch stark belastet wird.
(d) Soll der rückseitige Bereich 12 der Fahrgastzelle gegenüber dem Kofferraum 17 wärmegedämmt werden, so empfiehlt es sich, einen geeigneten Dämmkörper in den Sitz bzw. die Rückenlehne zu integrieren. Dies kann in der Form geschehen, daß Platten aus Wärmedämmaterial, beispielsweise einem Verbund aus Naturfasern oder auch Styropor, in Sitz bzw. Rückenlehne 12 eingearbeitet oder Sitz und/oder Rückenlehne 12 aus selbsttragenden isolierenden Dämmkörper-Formteilen gefertigt werden.
   Der Hutablagebereich 13 wird vorzugsweise als selbsttragendes Kunststoff- oder Hartschaumstoffteil ausreichender Dicke ausgeführt. Solche Bauteile sind zwar bereits aus Hartschaum und Verbundwerkstoffen hergestellt worden, dies jedoch im Hinblick auf die damit erreichbare Gewichtseinsparung bei ausreichender mechanischer Stabilität. Der durch solche Maßnahmen erreichte Wärmedämmeffekt ist daher in der Praxis, insbesondere wegen dem zu geringen Anteil dieser Flächen an der Außenfläche der Fahrgastzelle,vernachlässigbar.
(e) Im Bereich des Unterbodens 26 und des Kardantunnels 23 ist neben der innenseitigen Wärmedämmung 24 (vergl. (b) und (c)) auch eine außenseitige Wärmedämmung 25 vorgesehen. Dies kann beispielsweise durch Aufschäumen von schlagzähem Kunststoff auf die komplette Unterbodengruppe erreicht werden. Das Anbringen von einem oder mehreren Formteilen ist ebenfalls denkbar. Zusätzlich zur Wärmedämmung wird mit dieser Methode ein Schutz des Unterbodens 26 vor Salz, Steinschlag usw. erreicht. Für den Fall, daß Formteile zur Wärmedämmung benutzt werden, ist es denkbar, diese wegen der hohen mechanischen Belastung welcher sie ausgesetzt sind, als leicht austauschbare "Verschleißteile" auszubilden. Insbesondere in diesem Fall sollte auf eine gute Recyclebarkeit des verwendeten Dämmaterials geachtet werden.
(f) Zur Wärmedämmung der den Kofferraum 17 begrenzenden Bereiche 14, 16 sind Formteile aus einem harten Kunststoff vorgesehen. Der Kofferraumdeckel kann beispielsweise mittels eines Dämmkörpers aus Schaumstoff isoliert werden.
   Anstelle des Kofferraumes tritt bei Vans, Kombis und ähnlichen Kfz-Modellen der Laderaum, der dann entsprechend in Gesamtdämmmaßnahmen mit einbezogen werden kann. Die Bedeutung des Kofferraumes bzw. des Laderaums für die Wärmedämmung liegt in einer "Vergrößerung" der Fahrgastzelle durch eine Einbeziehung dieses Volumens in das Belüftungs- und/oder Klimatisierungssystem des Kraftfahrzeugs, wodurch der Sauerstoffvorrat vergrößert, die Außenluftzufuhr verringert und somit die Wärmedämmungsbilanz verbessert werden kann.
(g) Eine besondere Bedeutung kommt der Dämmung des Dachbereichs 18 zu, da dieser im Sommer durch Sonneneinstrahlung besonders stark aufgeheizt wird. Dazu ist vorgesehen, den Himmel aus einem Kunststoff mit besonders hoher Wärmedämmung zu fertigen. Auch hier sind Lösungen aus Hartschaum oder Verbundwerkstoffen bekannt, jedoch (wie auch oben im Zusammenhang mit dem Hutablagebereich dargestellt) ohne nennenswerten Wärmedämmungseffekt des Gesamtsystems 'Fahrgastzelle'.
   Da sich das zumeist aus Blech bestehende Fahrzeugdach vor allem bei langsamer Fahrt oder im Stau sehr stark aufheizen kann, ist weiter vorgesehen, zwischen der Wärmedämmung und der Innenseite des Dachblechs einen Lüftungsspalt 27 oder ein System von passiven Belüftungselementen, wie z.B. Lüftungskanälen 28 anzuordnen, welche mit dem Außenraum in Verbindung stehen. Dadurch wird es möglich, Wärme konvektiv nach außen zu transportieren. Die Konvektion kann dabei durch Einleitung des Fahrtwindes oder durch Einsatz einer separaten Lüftung gefördert werden. Eine solche Innenbelüftung kann natürlich auch in anderen Fahrzeugbereichen angewendet werden. Speziell für den Dachbereich kann eine solche Hinterlüftung auch durch aktive Belüftungselemente unterstützt werden. Hierbei können z.B. Gebläse eingesetzt werden, die auch von Solarzellen betrieben werden können, die beispielsweise im Schiebedach oder den Stoßfängern untergebracht sein können.
(h) Die Wärmedämmung der Tür erfolgt in diesem Ausführungsbeispiel zweiteilig. Ein äußerer Formkörper 4 ist mit der Innenseite des Außenblechs 1 verbunden. Da als zweiter Effekt neben der Wärmedämmung auch eine Erhöhung der Steifigkeit und des Energiedissipationsvermögens bei Verformung (Seitenaufprallschutz) angestrebt wird, sind zwei Maßnahmen getroffen: Zum einen ist der Formkörper vollflächig mit der Innenseite des Außenblechs verbunden, beispielsweise verklebt, zum anderen sind Bewehrungen 3, beispielsweise hochfeste Kunststofffasern in den Formkörper 4 eingearbeitet.
   Ein innerer Formkörper 4a befindet sich auf der Innenseite der Tür. Zwischen den beiden Formkörpern befindet sich ein Hohlraum 5 zur Aufnahme der Scheibe 6. Der innere Formkörper 4a trägt die benötigten Funktions- und Handhabungsteile, wie Führungs- und Hebeelemente für die Scheibe 6, Türschließaggregate u.ä. Auf der dem Innenraum zugewandten Seite des Formkörpers sind Dekorelemente 8 vorgesehen. Weiterhin sind Halterungen für Lautsprecher sowie Kanäle für Kabel vorgesehen. Der innere Formkörper trägt auch zur Versteifung der Tür bei, deshalb sind auch hier Bewehrungen 3 innerhalb des Formkörpers 4a vorgesehen.
   Der innere Formkörper übernimmt insgesamt vier Aufgaben: Er dient der Wärmedämmung, der Erhöhung der mechanischen Stabilität, als Baugruppenträger und als Innendekor, und stellt somit ein besonderes Beispiel für die Möglichkeiten erfindungsgemäßer Wärmedämmung dar.
   Alle oben genannten Dämmaßnahmen können natürlich auch dann angewendet werden, wenn die Karosserie oder Teile davon aus Kunststoff gefertigt sind.

## Patentansprüche

1. Kraftfahrzeug mit einem Innenraum in Gestalt einer Fahrgastzelle, die aus einem konstruktiv tragenden Gerüst und ergänzenden Bauteilen wie z.B. Türen gebildet ist, wobei außenbegrenzende Flächen des Innenraums (11) zumindest teilweise mit Wärmedämmmaterialien versehen sind,
dadurch gekennzeichnet, daß die außen begrenzenden Flächen des Innenraumes (11) einschließlich der außen begrenzenden Hohlräume mit Wärmedämmaterialien versehen sind, die zumindest zum Teil als Formkörper ausgebildet sind, und daß die verwendeten Wärmedämmmaterialien hinsichtlich ihrer Formgebung und/oder ihrer Materialwahl und/oder ihrer Anbringung so ausgebildet sind, daß sie die Grundfunktion und Eigenschaften sowohl ihres zugeordneten Bauteils als auch des gesamten Kraftfahrzeuges insbesondere hinsichtlich mechanischer Stabilität und/oder Schalldämmung und/oder Gewichtsreduzierung verbessern.

2. Kraftfahrzeug nach Anspruch 1, dadurch gekennzeichnet, daß die Wärmedämmmaterialien aus mindestens einem nachwachsenden Rohstoff oder Verbindungen/Derivaten dieses Rohstoffs bestehen.

3. Kraftfahrzeug nach Anspruch 1, dadurch gekennzeichnet, daß die Wärmedämmaterialien aus Kunststoff bestehen.

4. Kraftfahrzeug nach Anspruch 2 und 3, dadurch gekennzeichnet, daß die Wärmedämmaterialien aus einem Verbundwerkstoff aus synthetischen Materialien einerseits und nachwachsenden Rohstoffen andererseits bestehen.

5. Kraftfahrzeug nach Anspruch 1, dadurch gekennzeichnet, daß auch die Innenflächen des Kofferraums (17) oder des Laderaums mit Wärmedämmaterialien versehen sind.

6. Kraftfahrzeug nach Anspruch 5, dadurch gekennzeichnet, daß der Kofferraum/Laderaum mit in das Belüftungssystem des Kraftfahrzeuges integriert ist.

7. Kraftfahrzeug nach Anspruch 1, dadurch gekennzeichnet, daß der Dämmkörper eine mechanisch tragende oder versteifende Funktion im zugeordneten Bauteil übernimmt (z.B. in der Tür).

8. Kraftfahrzeug nach Anspruch 1, dadurch gekennzeichnet, daß der Dämmkörper in unfallgefährdeten Bereichen des Kraftfahrzeugs elastisch oder nachgiebig und energieabsorbierend ausgebildet ist, z.B. im Bereich (9) des Armaturenbretts.

9. Kraftfahrzeug nach Anspruch 1, dadurch gekennzeichnet, daß der Dämmkörper eine hoch belastbare Oberfläche aufweist, die hohe Druckeinwirkungen in begrenzten Flächenbereichen aufnimmt und verteilt, z.B. im Bodenbereich (10,16) des Innenraums und des Kofferraums.

10. Kraftfahrzeug nach Anspruch 1, dadurch gekennzeichnet, daß der Dämmkörper durch Ausschäumen eines allseitig begrenzten Hohlraums gebildet ist, z.B. bei Schweller (21) und Holmen (22).

11. Kraftfahrzeug nach Anspruch 1, dadurch gekennzeichnet, daß das betreffende Bauteil vollständig durch einen Dämmkörper ausreichender Eigensteifigkeit gebildet ist, z.B. im Bereich (13) der Hutablage.

12. Kraftfahrzeug nach Anspruch 1, dadurch gekennzeichnet, daß der Dämmkörper als Zusatzteil in sein zugehöriges Funktionsbauteil integriert ist, z.B. in Sitzen und Rückenlehnen des Rücksitzbereichs (12).

13. Kraftfahrzeug nach Anspruch 1, dadurch gekennzeichnet, daß der Dämmkörper unmittelbar an der Innenseite des Außenblechs des Kfz-Innenraums (11) und/oder Kofferraums (17) und/oder Laderaums gehalten ist.

14. Kraftfahrzeug nach Anspruch 13, dadurch gekennzeichnet, daß der Dämmkörper flächig mit der Innenseite des Außenblechs verbunden ist.

15. Kraftfahrzeug nach Anspruch 1, dadurch gekennzeichnet, daß der Dämmkörper unmittelbar an der Außenseite des Außenblechs gehalten und mit einer witterungsbeständigen Außenhaut versehen ist.

16. Kraftfahrzeug nach Anspruch 13, dadurch gekennzeichnet, daß zwischen Außenblech (1) und Dämmkörper eine Hinterlüftung (27, 28) vorgesehen ist, die mit der Außenluft in Verbindung steht.

17. Kraftfahrzeug nach Anspruch 1, dadurch gekennzeichnet, daß der bauteilspezifische Dämmkörper aus einem homogenen Grundmaterial mit darin eingeschlossenen Verstärkungsteilen besteht, die auch als Träger für Funktionselemente des jeweiligen Bauteils dienen können.

18. Kraftfahrzeug nach Anspruch 17, dadurch gekennzeichnet, daß die Verstärkungsteile Profile oder Stanzteile aus Metall sind.

19. Kraftfahrzeug nach Anspruch 17, dadurch gekennzeichnet, daß die Verstärkungsteile Formteile aus nachwachsenden Rohstoffen sind.

20. Kraftfahrzeug nach Anspruch 17, dadurch gekennzeichnet, daß die Verstärkungsteile Formteile aus hochfestem Kunststoff sind.

21. Kraftfahrzeug nach Anspruch 1, dadurch gekennzeichnet, daß insbesondere in den an den Motorraum angrenzenden Bereichen der Dämmkörper durch Materialwahl und/oder Formgebung schall dämmend ausgebildet ist.

22. Kraftfahrzeug nach Anspruch 16, dadurch gekennzeichnet, daß die Hinterlüftung insbesondere des Dachbereichs in das Belüftungssystem des Kraftfahrzeugs integriert ist.

23. Kraftfahrzeug nach Anspruch 22, dadurch gekennzeichnet, daß passive Belüftungselemente (z.B. Luftführungskanäle) und/oder aktive Belüftungselemente (z.B. solarbetriebenes Gebläse) die Hinterlüftung bewirken oder unterstützen.

24. Kraftfahrzeug nach Anspruch 1, dadurch gekennzeichnet, daß die Fenster aus wärmedämmendem Glas ausgeführt sind, so daß die Wärmedämmung einen Vollwärmeschutz ergibt.

## Claims

1. Automotive vehicle, having an interior in the form of a passenger compartment which is formed from a load-bearing frame and supplementary compartment parts, such as doors, for example, externally defining faces of the interior (11) being provided at least partially with heat insulating materials, characterised in that the externally defining faces of the interior (11), including the externally defining cavities, are provided with heat insulating materials, at least some of which are configured as moulded bodies, and in that the heat insulating materials used are so configured, in respect of their form-shaping and/or their choice of material and/or their mounting, that they improve the main function and properties both of their associated component part and of the entire automotive vehicle, more especially in respect of mechanical stability and/or sound insulation and/or weight reduction.

2. Automotive vehicle according to claim 1, characterised in that the heat insulating materials are formed from at least one renewable raw material or compounds/derivatives of this raw material.

3. Automotive vehicle according to claim 1, characterised in that the heat insulating materials are formed from plastics material.

4. Automotive vehicle according to claims 2 and 3, characterised in that the heat insulating materials are formed from a composite material formed from synthetic materials, on the one hand, and renewable raw materials, on the other hand.

5. Automotive vehicle according to claim 1, characterised in that the internal faces of the boot area (17) or of the loading area are also provided with heat insulating materials.

6. Automotive vehicle according to claim 5, characterised in that the boot area/loading area is jointly incorporated in the ventilation system of the automotive vehicle.

7. Automotive vehicle according to claim 1, characterised in that the insulating body assumes a mechanically supporting or reinforcing function in the associated component part (e.g. in the door).

8. Automotive vehicle according to claim 1, characterised in that the insulating body is configured to be resilient or flexible and energy-absorbent in accident-prone regions of the automotive vehicle, e.g. in the region (9) of the instrument panel.

9. Automotive vehicle according to claim 1, characterised in that the insulating body has a highly loadable surface, which absorbs and distributes high compressive effects in restricted face regions, e.g. in the bottom region (10,16) of the interior and of the boot area.

10. Automotive vehicle according to claim 1, characterised in that the insulating body is formed by producing a cavity, which is defined in all directions, from expanded foam, e.g. in the case of sill (21) and cross-ties (22).

11. Automotive vehicle according to claim 1, characterised in that the pertinent component part is completely formed by an insulating body of sufficient inherent rigidity, e.g. in the region (13) of the parcel shelf.

12. Automotive vehicle according to claim 1, characterised in that the insulating body is incorporated as an additional part in its associated operative component part, e.g. in seats and back-rests of the rear seat region (12).

13. Automotive vehicle according to claim 1, characterised in that the insulating body is retained directly on the internal surface of the external panel of the automotive vehicle interior (11) and/or boot area (17) and/or loading area.

14. Automotive vehicle according to claim 13, characterised in that the insulating body is connected, surface-to-surface, to the inside of the external panel.

15. Automotive vehicle according to claim 1, characterised in that the insulating body is retained directly on the outside of the external panel and provided with a weather-resistant external skin.

16. Automotive vehicle according to claim 13, characterised in that a rear ventilation means (27, 28), which communicates with the outside air, is provided between external panel (1) and insulating body.

17. Automotive vehicle according to claim 1, characterised in that the insulating body, which is specific to the component part, is formed from an homogeneous basic material with reinforcing parts enclosed therein, which parts may also serve as carriers for operational members of the respective component part.

18. Automotive vehicle according to claim 17, characterised in that the reinforcing members are profiles or stamped parts formed from metal.

19. Automotive vehicle according to claim 17, characterised in that the reinforcing parts are moulded parts formed from renewable raw materials.

20. Automotive vehicle according to claim 17, characterised in that the reinforcing parts are moulded parts formed from high-strength plastics material.

21. Automotive vehicle according to claim 1, characterised in that the insulating body is configured to be sound-insulating in the regions adjacent the engine compartment, by the selection of material and/or form-shaping.

22. Automotive vehicle according to claim 16, characterised in that the rear ventilation means, more especially for the roof region, is incorporated in the ventilation system of the automotive vehicle.

23. Automotive vehicle according to claim 22, characterised in that passive ventilation elements (e.g. air-conducting channels) and/or active ventilation elements (e.g. solar-operated fan) effect or promote the rear ventilation.

24. Automotive vehicle according to claim 1, characterised in that the windows are formed from heat-insulating glass, so that the heat insulation provides complete insulation against loss of heat.

## Revendications

1. Véhicule automobile ayant un espace intérieur formé d'un habitacle qui est constitué d'une ossature porteuse et d'éléments complémentaires tel que portes, les surfaces qui limitent extérieurement l'espace intérieur (11) étant pourvues au moins en partie d'isolants thermiques,
caractérisé par le fait que les surfaces qui limitent extérieurement l'espace intérieur (11), y compris les cavités limites extérieures, sont pourvues d'isolants thermiques constitués au moins en partie de corps de forme, et que les isolants thermiques utilisés sont, en ce qui concerne leur façonnage et/ou le choix de leur matière et/ou leur montage, conçus de façon à améliorer la fonction de base et les propriétés à la fois de l'élément de construction auquel ils sont associés et de l'ensemble du véhicule automobile en particulier en ce qui concerne la stabilité mécanique et/ou l'isolation acoustique et/ou la réduction du poids.

2. Véhicule automobile selon la revendication 1, caractérisé par le fait que les isolants thermiques sont constitués d'au moins une matière brute à post-dilatation ou de composés/dérivés de cette matière brute.

3. Véhicule automobile selon la revendication 1, caractérisé par le fait que les isolants thermiques sont constitués de plastique.

4. Véhicule automobile selon les revendications 2 et 3, caractérisé par le fait que les isolants thermiques sont constitués d'un matériau composite formé d'une part de matières synthétiques et d'autre part de matières brutes à post-dilatation.

5. Véhicule automobile selon la revendication 1, caractérisé par le fait que les surfaces intérieures du coffre (17) ou de l'espace de chargement sont elles aussi pourvues d'isolants thermiques.

6. Véhicule automobile selon la revendication 5, caractérisé par le fait que le coffre/l'espace de chargement est intégré dans le système de ventilation du véhicule automobile.

7. Véhicule automobile selon la revendication 1, caractérisé par le fait que le corps isolant remplit une fonction de portance ou de renfort mécanique dans l'élément de construction associé (par exemple dans la porte).

8. Véhicule automobile selon la revendication 1, caractérisé par le fait que le corps isolant est élastique ou souple et absorbeur d'énergie dans les parties du véhicule menacées en cas d'accident, par exemple dans la zone (9) de la planche de bord.

9. Véhicule automobile selon la revendication 1, caractérisé par le fait que le corps isolant présente une surface à haute capacité de charge qui absorbe et répartit les fortes actions de pression dans des zones de surface limitées, par exemple dans la zone du plancher (10, 16) de l'espace intérieur et du coffre.

10. Véhicule automobile selon la revendication 1, caractérisé par le fait que le corps isolant est formé par remplissage de matière alvéolaire d'une cavité limitée de tous les côtés, par exemple de longerons (21) et de traverses (22).

11. Véhicule automobile selon la revendication 1, caractérisé par le fait que l'élément de construction concerné est formé entièrement d'un corps isolant de rigidité propre suffisante, par exemple dans la zone (13) de la planche à paquets.

12. Véhicule automobile selon la revendication 1, caractérisé par le fait que le corps isolant est intégré comme partie supplémentaire dans l'élément de construction fonctionnel associé à lui, par exemple dans les assises et les dossiers de la zone des sièges arrière (12).

13. Véhicule automobile selon la revendication 1, caractérisé par le fait que le corps isolant est monté directement sur la face intérieure de la tôle extérieure de l'espace intérieur (11) du véhicule automobile et/ou du coffre (17) et/ou de l'espace de chargement.

14. Véhicule automobile selon la revendication 13, caractérisé par le fait que le corps isolant est joint à plat à la face intérieure de la tôle extérieure.

15. Véhicule automobile selon la revendication 1, caractérisé par le fait que le corps isolant est monté directement sur la face extérieure de la tôle extérieure et est pourvu d'une peau extérieure résistant aux intempéries.

16. Véhicule automobile selon la revendication 13, caractérisé par le fait qu'entre la tôle extérieure (1) et le corps isolant est prévue une ventilation arrière (27, 28) qui communique avec l'air extérieur.

17. Véhicule automobile selon la revendication 1, caractérisé par le fait que le corps isolant propre à un élément de construction est constitué d'une matière de base homogène renfermant des éléments de renfort qui peuvent aussi servir de supports pour des éléments fonctionnels de l'élément de construction considéré.

18. Véhicule automobile selon la revendication 17, caractérisé par le fait que les éléments de renfort sont des profilés ou des pièces estampées en métal.

19. Véhicule automobile selon la revendication 17, caractérisé par le fait que les éléments de renfort sont des pièces de forme en matières brutes à post-dilatation.

20. Véhicule automobile selon la revendication 17, caractérisé par le fait que les éléments de renfort sont des pièces de forme en plastique à haute résistance.

21. Véhicule automobile selon la revendication 1, caractérisé par le fait qu'en particulier dans les zones contiguës au compartiment moteur, le corps isolant est isolant acoustique par le choix de sa matière et/ou par son façonnage.

22. Véhicule automobile selon la revendication 16, caractérisé par le fait que la ventilation arrière en particulier de la zone du toit est intégrée dans le système de ventilation du véhicule automobile.

23. Véhicule automobile selon la revendication 22, caractérisé par le fait que des éléments de ventilation passifs (par exemple des conduits d'air) et/ou des éléments de ventilation actifs (par exemple des ventilateurs solaires) produisent ou assistent la ventilation arrière.

24. Véhicule automobile selon la revendication 1, caractérisé par le fait que les vitres sont réalisées en verre isolant thermique, de sorte que l'isolation thermique est totale.
